# EUROPEAN PATENT SPECIFICATION

(11) **EP 2 490 408 B1**
(45) Date of publication and mention of the grant of the patent: **13.01.2016**
(21) Application number: 10791602.5
(22) Date of filing: 29.06.2010
(51) Int. Cl.: H04L 29/12

(54) **METHOD AND SYSTEM FOR MANAGING INTERNET ADDRESSES**
VERFAHREN UND SYSTEM ZUR VERWALTUNG VON INTERNETADRESSEN
PROCÉDÉ ET SYSTÈME POUR GÉRER DES ADRESSES INTERNET

(30) Priority: 15.12.2009 CN 200910242706
(43) Date of publication of application: 22.08.2012
(73) Proprietor: ZTE Corporation, Shenzhen, Guangdong 518057 (CN)
(72) Inventor: LI, Fei, Shenzhen Guangdong 518057 (CN)
(74) Representative: V.O.
(86) International application number: PCT/CN2010/074723
(87) International publication number: WO 2010/149096

(56) References cited:
- EP-A1- 1 718 032
- WO-A1-2008/126576
- CN-A- 101 027 929
- CN-A- 101 133 612
- US-A1- 2006 114 835
- ETSI STANDARD: "Smart cards; UICC-Terminal interface; Internet Protocol connectivity between UICC and terminal (Release 8)", ETSI TS 102 483 V8.1.0, , vol. 102 483, no. v8.1.0 30 April 2009 (2009-04-30), pages 1-21, XP002566984, Retrieved from the Internet: URL:http://webapp.etsi.org/workProgram/Rep ort_Workltem.asp?wki:id=30963 [retrieved on 2010-02-04]
- T'JOENS C HUBLET ALCATEL P DE SCHRIJVER MIND Y: "DHCP reconfigure extension; rfc3203.txt", 20011201, 1 December 2001 (2001-12-01), XP015008982, ISSN: 0000-0003
- DSL FORUM: "Auto-Configuration for Basic Internet (IP-based) Services", DSL FORUM TECHNICAL REPORT TR-044 , December 2001 (2001-12), pages 1-24, XP002562235, Retrieved from the Internet: URL:http://www.broadband-forum.org/technic al/download/TR-044.pdf [retrieved on 2010-01-08]
- DIMITRELIS A WILLIAMS MOTOROLA A: "Autoconfiguration of routers using a link state routing protocol; draft-dimitri-zospf-00.txt", 20021001, 1 October 2002 (2002-10-01), XP015000723, ISSN: 0000-0004

## Description

### Field of the invention

The disclosure relates to a technique for Internet Protocol (IP) address management, particularly relates to a method and system for terminal-based Internet address management.

### Background of the invention

For smart cards, mass Subscriber Identity Module (SIM) cards and multimedia SIM cards, it has been proposed that a Universal Integrated Circuit Card (UICC) is connected to a terminal through an InterChip Universal Serial Bus (IC-USB) interface, the Transmission Control Protocol (TCP)/Internet Protocol (IP) protocol stack is run on both the terminal and the UICC, and that communication between the two sides is achieved by inter-network equipment communication.

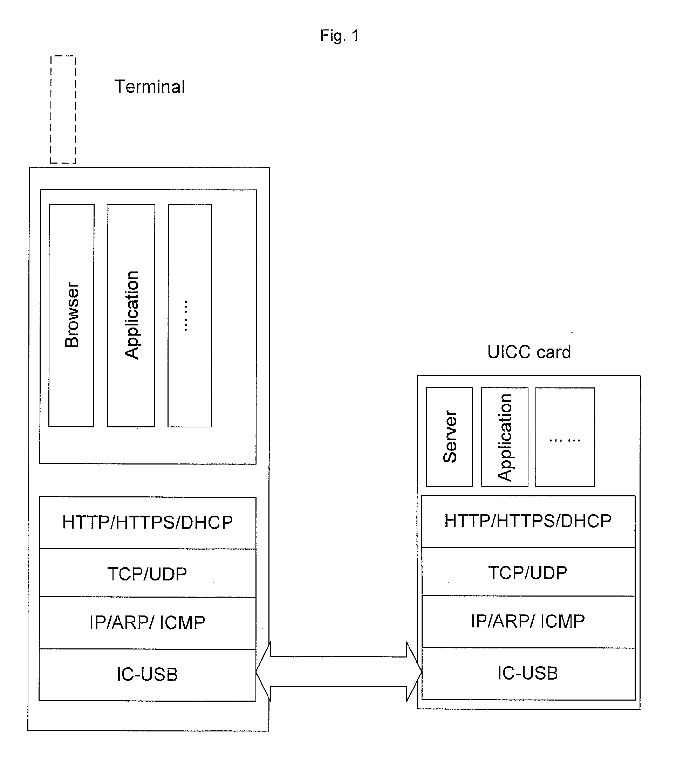

The UICC may support services such as Smart Card Web Server (SCWS)-based SIM cards and mass memory cards and may be accessed by the terminal through various applications. The specific structure is shown in Fig. 1.

It is stipulated by the European Telecommunications Standards Institute (ETSI) standard that internal IPs are used in the terminal and the UICC. Currently, IP address assignment mainly includes the following two approaches:
1) fixed IP addresses are used in the terminal and the UICC.
   For example, the UICC uses a fixed IP address 192.168.0.1 and the terminal uses a fixed IP address 192.168.0.2.
2) the IP addresses are assigned by the Dynamic Host Configuration Protocol (DHCP) server in the terminal.

Since most of the existing terminals can access the Internet via various ports, the terminal, when connected to the UICC, can be connected to another network by another physical interface, e.g. the terminal can be connected to a Wireless Local Area Network (WLAN) by Wifi, or connected to a Personal Computer (PC) by a Universal Serial Bus (USB), through which the terminal communicates with a PC using a simulated Ethernet.

In the above cases, it is possible that the network address to which the terminal newly accesses conflicts with the network address of the current terminal or the UICC on the port connecting the current terminal and the UICC.

For example, if the IP address of the UICC is 192.168.0.1, while the IP address of the network which the terminal currently accesses is 192.168.0.0, when the subnet mask is 255.255.255.0, the IP address of the UICC conflicts with the IP address of the network-currently accessed by the terminal, which results in communication error.

However, no solution has been proposed to solve this problem effectively.

Document ETSI STANDARD: "Smart cards; UICC-Terminal interface; Internet Protocol connectivity between UICC and terminal (Release 8)", ETSI TS 102 483 V8.1.0 defines how an Internet Protocol connection may be established between a UICC and a terminal connected through a UCC-Terminal Interface able to carry Internet Protocol packets.

EP 1 718 032 A1 discloses an access unit for coupling a plurality of subscribers to a data communication network, in which an auto-configuration control unit learns a particular network address as being newly assigned to a second subscriber different from a first subscriber and in which an auto-configuration preemption unit issues an auto-configuration control signal towards the first subscriber, whereby a new network address is dynamically assigned to the first subscriber.

Document "DHCP reconfigure extension; rfc3203.txt" defines extensions to DHCP to allow dynamic reconfiguration of a single host triggered by the DHCP server. This is achieved by introducing a unicast FORCERENEW message which forces the client to the RENEW state.

Document "Auto-Configuration for Basic Internet (IP-based) Services" describes the procedures recommended to automatically configure connections between B-NT Customer Premises Equipment and Internet Services, focusing on the requirements across the DSL local loop. It specifies the usage of PPP and its related control protocols for services that require authentication, accounting and addressing and DHCP for bridged configurations and extensions beyond the configuration capabilities of a PPP connection.

Document "Auto-configuration of routers using a link state routing protocol; draft-dimitri-zospf-00.txt" regards the use of version 3 of the Open Shortest Path First (OSPF) protocol as a mechanism for the auto-configuration of IP routers within an OSPF area. Specifically, a method for the allocation and distribution of IPv4 and IPv6 subnet addresses without explicit configuration is described. Such a mechanism would be useful in an environment where routing is desirable, but the network administration skills necessary to configure IP routers are not available. This draft presents zOSPF (zero-configuration OSPF), a protocol based on OSFPv3 that will allow routers to self configure and forward IPv4 and IPv6 traffic.

### Summary of the invention

In view of the above, the main object of the disclosure is to provide a method and system for terminal-based internet address management, which can prevent communication error caused by network address conflict, and thus improve communication stability.

To achieve the above object, according to a first aspect, the present invention provides a method for terminal-based internet address management as defined in claim 1.

Preferably, the step that the terminal sends a network address conflict message to the UICCincludes: a network address conflict management module of the terminal sends the network address conflict message to the UICC;
the step that the UICC releases an Internet Protocol (IP) address currently used includes:
after receiving the network address conflict message, a network address conflict management module of the UICC sends an IP address release request signal to a Dynamic Host Configuration Protocol (DHCP) client;
after releasing the IP address in response to the IP address release request signal, the DHCP client returns a response to the network address conflict management module of the UICC, and the DHCP client sends a DHCP release message to a DHCP server of the terminal.
the method further includes the following steps: obtaining, by the terminal and the UICC, their respective IP address during an initialization process; and intercepting at the specific port by the network address conflict management module of the UICC.
the network address conflict management module of the UICC intercepts using Port 67 for a DHCP service.
the step that the network address conflict management module of the terminal sends the network address conflict message to the UICC includes: the network address conflict management module of the terminal sends the network address conflict message to Port 67 of the UICC, using a User Datagram Protocol (UDP).

According to a second aspect, the present invention provides a system for terminal-based Internet address management as defined in claim 6.

Preferably, the terminal includes a network address conflict management module and a DHCP server; the UICC includes a network address conflict management module and a Dynamic Host Configuration Protocol (DHCP) client, wherein
the network address conflict management module of the terminal is configured, when the network address of the subnet which the terminal accesses conflicts with the network address of the subnet in which the UICC is currently located, to send a network address conflict message to the UICC;
the network address conflict management module of the UICC is configured, after receiving the network address conflict message from the network address conflict management module of the terminal, to send an IP address release request signal to the DHCP client;
the DHCP client is configured to release the IP address in response to the IP address release request signal from the network address conflict management module of the UICC, to return a response to the network address conflict management module of the UICC, and to send a DHCP release message to a DHCP server of the terminal.
the DHCP server is configured, after receiving the DHCP release message from the DHCP client, to re-assign IP addresses for the terminal and the UICC.
the terminal and the UICC are further configured to obtain their respective IP address during an initialization process; and
the network address conflict management module of the UICCis further configured to intercept at a specific port.
the network address conflict management module of the terminal is configured to intercept using Port 67 for a DHCP service.
the network address conflict management module of the terminal is configured to send the network address conflict message to Port 67 of the UICC, using a User Datagram Protocol (UDP).

According to the method and system for terminal-based Internet address management of the disclosure, when the network addresses of the terminal and the UICC conflict with the network address of another network, the terminal notifies the UICC of the network address conflict, the UICC releases the currently used IP address after receiving the notification, and sends a release message to the client. Subsequently, the DHCP client of the UICC returns to the initialization state and re-applies for an IP address. In the case of network address conflict, the terminal of the disclosure can timely notify the UICC to change the IP address. Therefore, communication error caused by the conflict of network addresses may be prevented, and thus communication stability may be improved.

### Brief description of the drawings

Fig. 1 shows a structural diagram of a terminal and a UICC, which are connected through an IC-USB;
Fig. 2 shows a structural diagram of a terminal-based Internet address management system according to the disclosure;
Fig. 3 shows a structural diagram of the detailed structure of the terminal-based Internet address management system according to the disclosure;
Fig. 4 shows a flowchart of a method for terminal-based Internet address management according to the disclosure;
Fig. 5 shows a schematic diagram of a message format of a network address conflict message according to the disclosure; and
Fig. 6 shows a flowchart of a method for terminal-based Internet address management according to embodiment 1 of the disclosure.

### Detailed description of the invention

The basic idea of the disclosure is that when the network addresses of a terminal and an UICC conflict with the network address of another network, the terminal notifies the UICC of the network address conflict. After receiving the notification, the UICC releases the current IP address being used, and sends a release message to the client. Subsequently, the DHCP client of the UICC returns to the initializing state and reapplies for an IP address.

The implementation of the technical solution is described below with reference to the accompanying drawings in details.

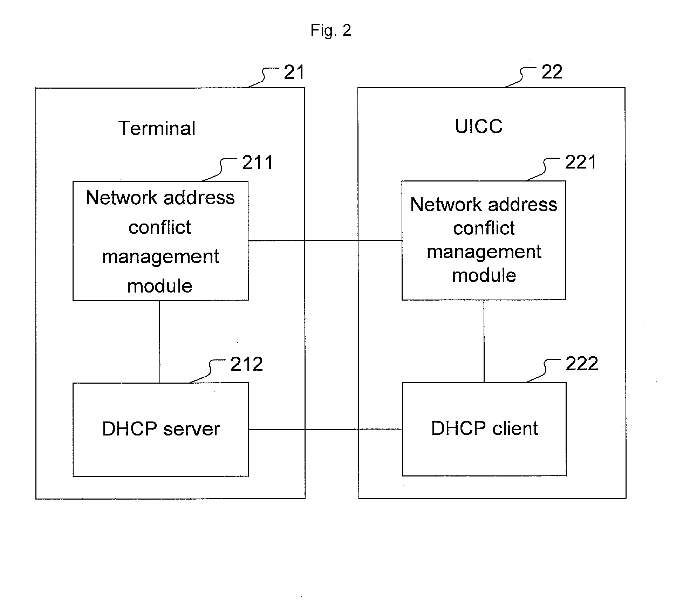

Fig. 2 shows a structural diagram of a terminal-based Internet address management system according to the disclosure.

As shown in Fig. 2, the terminal-based Internet address management system according to the disclosure includes
a terminal 21 and a UICC 22, wherein
the terminal 21 includes a network address conflict management module 211 and a DHCP server 212, and the UICC 22 includes a network address conflict management module 221 and a DHCP client 222, wherein
the network address conflict management module 211 of the terminal is configured to send a network address conflict message to the UICC 22 when the network address of the network which terminal 21 accesses conflicts with the network address of the subnet in which the UICC is currently located;
the network address conflict management module 221 of the UICC is configured to send an IP release request signal to the DHCP client 222 after receiving the network address conflict message from the network address conflict management module 211 of the terminal;
the DHCP client 222 is configured to release the IP address according to the IP release request signal from the network address conflict management module 221 of the UICC, to return a response to the network address conflict management module 221 of the UICC and to send a DHCP release message to the DHCP server 212 of the terminal;
the DHCP server 212 is configured to reassign IP addresses for the terminal 21 and the UICC 22, after receiving the DHCP release message from the DHCP client 222.

The terminal 21 and the UICC 22 are further configured to obtain their respective IP address during initialization processes.

The network address conflict management module 221 of the UICC is further configured to perform interception at a specific port.

The network address conflict management module 221 of the UICC is further configured to perform interception using Port 67 for the DHCP service.

The network address conflict management module 211 of the terminal is further configured to send the network address conflict message to Port 67 of the UICC through the UDP.

Fig. 2 only involves the related main components of the terminal and the UICC of the disclosure, and relevant interfaces and protocol stacks are not shown.

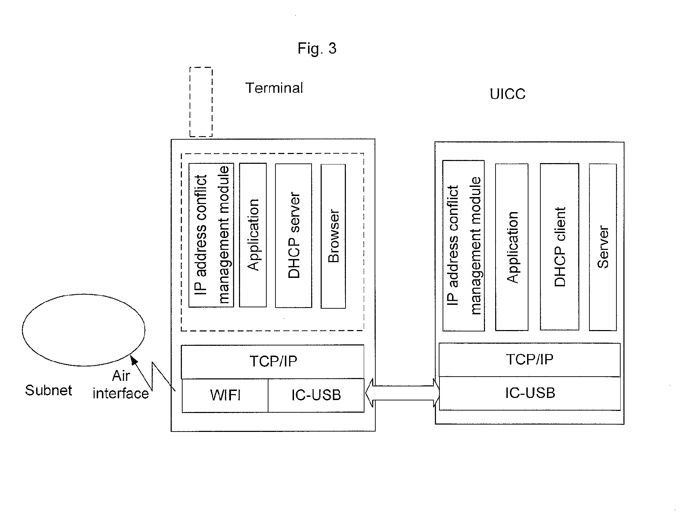

Fig. 3 shows a structural diagram of the detailed structure of a terminal-based Internet address management system.

As shown in Fig. 3, a mobile terminal includes a browser, an application, a DHCP server, a network address conflict management module, a TCP/IP protocol stack, an IC-USB interface and a WIFI module.

A UICC card includes a server, an application, a DHCP client, a network address conflict management module, a TCP/IP protocol stack and an IC-USB interface.

The terminal and the UICC are connected through an IC-USB port, and the terminal can access another network through the WIFI module.

The network address conflict management module at the terminal side and the network address conflict management module at the UICC side can be integrated with the DHCP server and the DHCP client, respectively or can be operated independently.

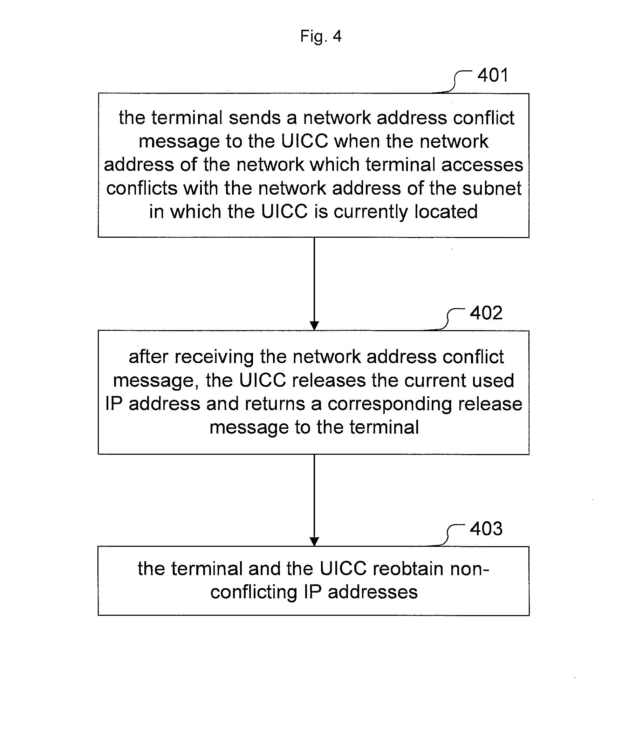

Fig. 4 shows a flowchart of a terminal-based Internet address management method according to the disclosure.

As shown in Fig. 4, the terminal-based Internet address management method according to the disclosure includes the following steps.

Step 401: the terminal sends a network address conflict message to the UICC when the network address of the network which terminal accesses conflicts with the network address of the subnet in which the UICC is currently located.

an IP address consists of a network address and a host address.

In the disclosure, when the subnet segment address of the IP address of the network which the terminal currently accesses conflicts with the subnet segment address of the IP address of the connection port between the terminal and the UICC, it is considered as a network address conflict.

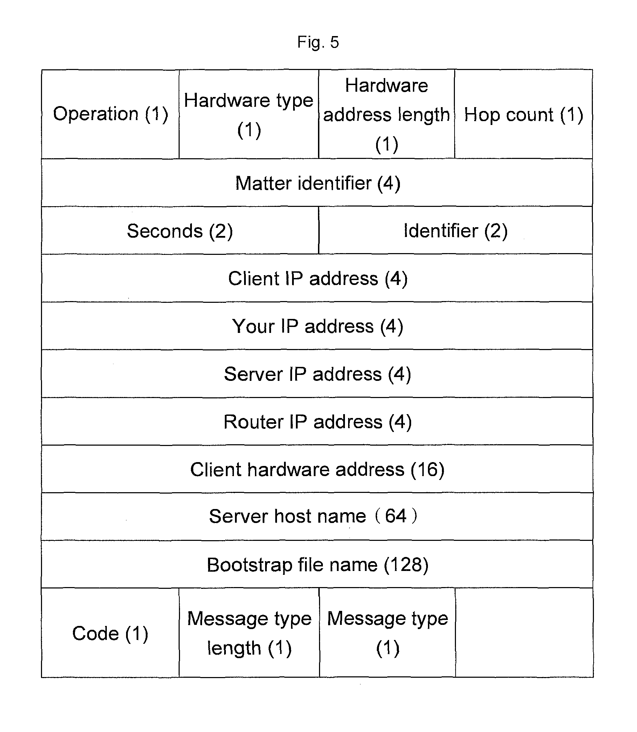

Fig. 5 shows a schematic diagram of a message format of a network address conflict message according to the disclosure.

For the message format as shown in Fig. 5, the terminal can set the operation field as 2, which indicates that the network address conflict message is sent by the terminal to the UICC;
the hardware type is set as 1, representing the Ethernet; the IP address of the UICC is written in both the client address and local IP address; the terminal IP address is written in both the server IP address and the router IP address;
the Ethernet address is written in the client hardware address; Localtermal is written in the server host name;
the bootstrap file is null and the code is set as 53, representing the message type. The message type length is 1, representing the subsequent length of 1 byte; the message type is set as 8, indicating that the message is an IP address conflict message. The contents of other fields can be added according to the DHCP definitions.

Step 402: after receiving the network address conflict message, the UICC releases the current IP address being used and returns a corresponding release message to the terminal.

It is to be noted that, the release of the IP address and the return of the corresponding release message may be performed concurrently or according to a certain sequence.

Step 403: the terminal and the UICC obtain non-conflicting IP addresses.

The implementation of the technical solution is described below with reference to the specific embodiments in details.

### Embodiment 1

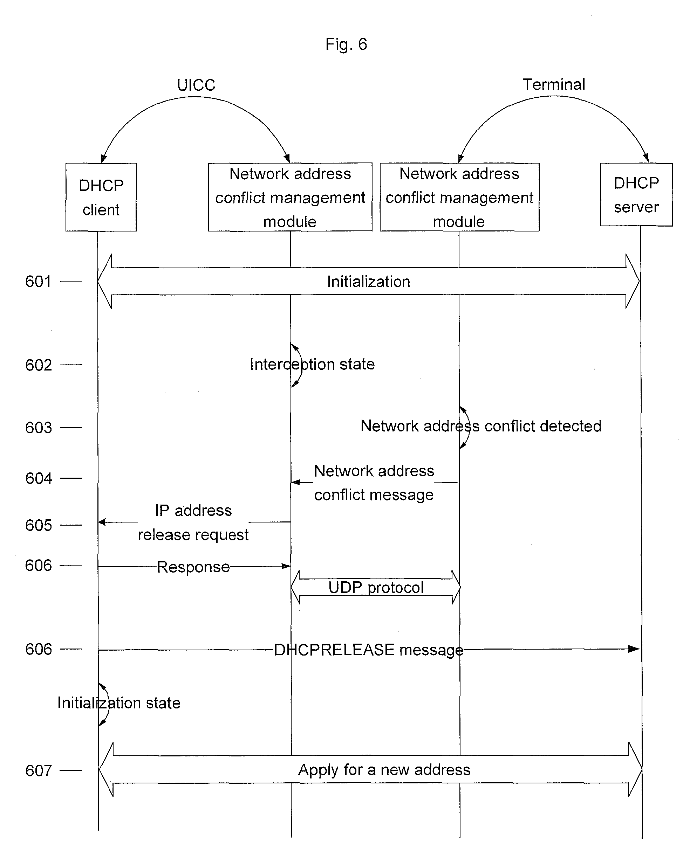

Fig. 6 shows a flowchart of a terminal-based Internet address management method according to embodiment 1 of the disclosure.

As shown in Fig. 6, the terminal-based Internet address management method according to embodiment 1 of the disclosure includes the following steps:
Step 601: the terminal and the UICC obtain their respective IP address during an initialization process.

For example, during the initialization process, the UICC and the terminal obtain IP addresses 192.168.0.1 and 192.168.0.2 respectively and a subnet mask 255.255.255.0 at the IC-USB port.

Step 602: the network address conflict management module of the UICC performs an interception at the specific port.

For example, the network address conflict management module of the UICC can use Port 67 for the DHCP service to perform the interception.

Step 603: when the terminal accesses another subnet, it is determined whether the network address of the subnet conflicts with the network address for the IP address obtained in Step 601.

When the terminal accesses another subnet through the WIFI module, if the IP address obtained through he DHCP is an IP address of the same subnet, e.g. the IP address is also 192.168.0.2 and the subnet mask is 255.255.255.0, this will result in a network address conflict.

Step 604: the network address conflict management module of the terminal sends the network address conflict message to the UICC.

For example, the network address conflict management module at the terminal side can send a network address conflict message to Port 67 of the UICC through the UDP.

Step 605: after receiving the network address conflict message, the network address conflict management module of the UICC sends an IP release request signal to the DHCP client.

Step 606: the DHCP client returns a response to the network address conflict management module of the UICC and sends a DHCP release message (DHCPRELEASE) to the DHCP server of the terminal, and the UICC returns to a DHCP initialization state.

Step 607: the terminal and the UICC re-obtain non-conflicting IP addresses.

Here, the IP addresses re-obtained by the terminal and the UICC are generally assigned by the DHCP server.

Specifically, after receiving the DHCP release message, the DHCP server confirms that the UICC has released the original IP address. The network address conflict management module of the terminal configures the IP address of the connection port between the terminal and the UICC as an IP address of another subnet, e.g. 192.168.1.2, with the subnet mask 255.255.255.252,
and configures IP addresses assigned by the DHCP server within a range of the same subnet.

Accordingly, the UICC card can re-use the DHCP to apply for a new IP address from the DHCP server of the terminal, e.g. 192.168.1.1 with the subnet mask 255.255.255.252.

In this way, the problem of network address conflict is solved.

The above contents serve only as preferred embodiments of the present disclosure and are not intended to limit the scope of the present disclosure.

## Claims

1. A method for terminal-based Internet address management, wherein an IP address consists of a network address and a host address, the method comprising:
when a network address of a subnet segment which a terminal accesses conflicts with a network address of a subnet segment in which a Universal Integrated Circuit Card, UICC, is currently located, which is the network address of the IP address of the connection port between the terminal and the UICC,
sending (401), by the terminal, a network address conflict message to the UICC;
after receiving the network address conflict message, releasing (402), by the UICC, an Internet Protocol, IP, address currently used, and returning, by the UICC, a corresponding release message to the terminal;
re-obtaining (403), by the terminal and the UICC, non-conflicting IP addresses with a network address of the subnet segment in which the UICC is currently located different from the network address of the subnet segment which the terminal accesses.

2. The method according to claim 1, wherein
the sending, by the terminal, the network address conflict message to the UICC comprises:
sending (604), by a network address conflict management module of the terminal, the network address conflict message to the UICC;
the releasing, by the UICC, the IP address currently used comprises:
after receiving the network address conflict message, sending, by a network address conflict management module of the UICC, an IP address release request signal to a Dynamic Host Configuration Protocol, DHCP, client;
after releasing the IP address in response to the IP address release request signal, returning (607), by the DHCP client, a response to the network address conflict management module of the UICC, and sending, by the DHCP client, a DHCP release message to a DHCP server of the terminal.

3. The method according to claim 2, further comprising: obtaining (601), by the terminal and the UICC, their respective IP address during an initialization process; and intercepting (602) at a specific port by the network address conflict management module of the UICC.

4. The method according to claim 3, wherein the network address conflict management module of the UICC intercepts using Port 67 for a DHCP service.

5. The method according to any one of claims 2 to 4, wherein the sending, by the network address conflict management module of the terminal, the network address conflict message to the UICC comprises: sending, by the network address conflict management module of the terminal, the network address conflict message to Port 67 of the UICC, using a User Datagram Protocol, UDP.

6. A system for terminal-based Internet address management, wherein an IP address consists of a network address and a host address, the system comprising:
a terminal (21) and a Universal Integrated Circuit Card, UICC (22), wherein
the terminal (21) is configured, when a network address of a subnet segment which the terminal accesses conflicts with a network address of a subnet segment in which the UICC is currently located, which is the network address of the IP address of the connection port between the terminal and the UICC,
to send a network address conflict message to the UICC (22); and when receiving a release message from the UICC (22), to re-obtain a non-conflicting IP address with a network address of the subnet segment in which the UICC (22) is currently located different from the network address of the subnet segment which the terminal accesses.
the UICC (22) is configured, after receiving the network address conflict message from the terminal (21), to release an Internet Protocol, IP, address currently used, to return a corresponding release message to the terminal, and to re-obtain a non-conflicting IP address with a network address of the subnet segment in which the UICC (22) is currently located different from the network address of the subnet segment which the terminal accesses.

7. The system according to claim 6, wherein the terminal (21) comprises a network address conflict management module (211) and a DHCP server (212); and the UICC (22) comprises a network address conflict management module (221) and a DHCP client (222), wherein
the network address conflict management module (211) of the terminal (21) is configured, when a network address of a subnet which the terminal (21) accesses conflicts with a network address of a subnet in which the UICC (22) is currently located, to send a network address conflict message to the UICC (22);
the network address conflict management module (221) of the UICC (22) is configured, after receiving the network address conflict message from the network address conflict management module (211) of the terminal (21), to send an IP address release request signal to a DHCP client (222);
the DHCP client (222) is configured to release the IP address in response to the IP address release request signal from the network address conflict management module (221) of the UICC (22), to return a response to the network address conflict management module (221) of the UICC (22), and to send a DHCP release message to a DHCP server (212) of the terminal (21); and
the DHCP server (212) is configured, after receiving the DHCP release message from the DHCP client (222), to re-assign IP addresses for the terminal (21) and the UICC (22).

8. The system according to claim 7, wherein the terminal (21) and the UICC (22) are further configured to obtain their respective IP address during an initialization process; and
the network address conflict management module (221) of the UICC(22) is further configured to intercept at a specific port.

9. The system according to claim 8, wherein the network address conflict management module (221) of the UICC (22) is further configured to intercept using Port 67 for a DHCP service.

10. The system according to any one of claims 7-9, wherein the network address conflict management module (211) of the terminal (21) is further configured to send the network address conflict message to Port 67 of the UICC (22), using a User Datagram Protocol, UDP.

## Patentansprüche

1. Verfahren zur Verwaltung von Internetadressen auf der Basis von Endgeräten, wobei eine IP-Adresse aus einer Netzwerkadresse und einer Host-Adresse beseht, wobei das Verfahren umfasst:
wenn eine Netzwerkadresse eines Subnetzwerksegments, auf das ein Endgerät zugreift, sich im Konflikt befindet mit einer Netzwerkadresse eines Subnetzwerksegments, in dem sich eine Universal Integrated Circuit Card, UICC, aktuell befindet, welche die Netzwerkadresse der IP-Adresse des Verbindungs-Ports zwischen dem Endgerät und der UICC ist,
Senden (401) einer Netzwerkadress-Konfliktnachricht durch das Endgerät an die UICC;
nach dem Empfangen der Netzwerkadress-Konfliktnachricht Veröffentlichen (402) durch die UICC einer aktuell verwendeten Internet Protocol-Adresse (IP-Adresse), und zurückgeben durch die UICC einer entsprechenden Veröffentlichungsnachricht an das Endgerät;
neues Beziehen (403) durch das Endgerät und die UICC nicht im Konflikt stehender IP-Adressen mit einer Netzwerkadresse eines Subnetzwerksegments, in dem sich die UICC aktuell befindet, sich unterscheidend von der Netzwerkadresse des Subnetzwerksegments, auf welches das Endgerät zugreift.

2. Verfahren nach Anspruch 1, wobei
das Senden einer Netzwerkadress-Konfliktnachricht durch das Endgerät an die UICC umfasst:
Senden (604) der Netzwerkadress-Konfliktnachricht an die UICC durch ein Netzwerkadress-Konfliktverwaltungsmodul des Endgerätes;
wobei das Veröffentlichen der aktuell verwendeten IP-Adresse durch die UICC umfasst:
nach dem Empfangen der Netzwerkadress-Konfliktnachricht das Senden eines IP-Adress-Veröffentlichungs-Anforderungssignals durch ein Netzwerkadress-Konfliktverwaltungsmodul der UICC an einen Dynamic Host Configuration Protocol (DHCP) Client;
nach dem Veröffentlichen der IP-Adresse als Antwort auf das IP-Adress-Veröffentlichungs-Anforderungssignal das Zurückgeben (607) durch den DHCP-Client einer Antwort an das Netzwerkadress-Konfliktverwaltungsmodul der UICC und Senden einer DHCP-Veröffentlichungsnachricht durch den DHCP-Client an einen DHCP-Server des Endgerätes.

3. Verfahren nach Anspruch 2, ferner umfassend: Beziehen (601) durch das Endgerät und die UICC, ihrer entsprechenden IP-Adresse während einem Initialisierungsprozess; und Abfangen (602) an einem bestimmten Port durch das Netzwerkadress-Konfliktverwaltungsmodul der UICC.

4. Verfahren nach Anspruch 3, wobei das Netzwerkadress-Konfliktverwaltungsmodul der UICC unter Verwendung von Port 67 für einen DHCP-Dienst abfängt.

5. Verfahren nach einem der Ansprüche 2 bis 4, wobei das Senden durch das Netzwerkadress-Konfliktverwaltungsmodul des Endgerätes der Netzwerkadress-Konfliktnachricht an die UICC folgendes umfasst: Senden der Netzwerkadress-Konfliktnachricht durch das Netzwerkadress-Konfliktverwaltungsmodul des Endgerätes an Port 67 der UICC unter Verwendung eines User Datagram Protocol, UDP.

6. System zur Verwaltung von Internetadressen auf der Basis von Endgeräten, wobei eine IP-Adresse aus einer Netzwerkadresse und einer Host-Adresse besteht, wobei das System umfasst:
ein Endgerät (21) und eine Universal Integrated Circuit Card, UICC (22), wobei
das Endgerät (21) so konfiguriert ist, dass, wenn eine Netzwerkadresse eines Subnetzwerksegments, auf das ein Endgerät zugreift, sich im Konflikt befindet mit einer Netzwerkadresse eines Subnetzwerksegments, in dem sich die UICC aktuell befindet, welche die Netzwerkadresse der IP-Adresse des Verbindungs-Ports zwischen dem Endgerät und der UICC ist;
eine Netzwerkadress-Konfliktnachricht an die UICC (22) zu senden; und wenn eine Netzwerkadress-Konfliktnachricht von der UICC (22) empfangen wird,
neues Beziehen einer nicht im Konflikt stehenden IP-Adresse mit einer Netzwerkadresse eines Subnetzwerksegments, in dem sich die UICC (22) aktuell befindet, sich unterscheidend von der Netzwerkadresse des Subnetzwerksegments, auf welches das Endgerät zugreift;
wobei die UICC (22) so konfiguriert ist, dass sie nach dem Empfang der Netzwerkadress-Konfliktnachricht von dem Endgerät (21) eine aktuell verwendete Internet Protocol-Adresse (IP-Adresse) veröffentlicht, um eine entsprechende Veröffentlichungsnachricht an das Endgerät zurückzugeben, und um eine nicht im Konflikt stehende IP-Adresse mit einer Netzwerkadresse des Subnetzwerksegments neu zu beziehen, in dem sich die UICC (22) aktuell befindet, sich unterscheidend von der Netzwerkadresse des Subnetzwerksegments, auf welches das Endgerät zugreift.

7. System nach Anspruch 6, wobei das Endgerät (21) ein Netzwerkadress-Konfliktverwaltungsmodul (211) und einen DHCP-Server (212) umfasst; und wobei die UICC (22) ein Netzwerkadress-Konfliktverwaltungsmodul (221) und einen DHCP-Client (222) umfasst; wobei
das Netzwerkadress-Konfliktverwaltungsmodul (211) des Endgerätes (21) so konfiguriert ist, dass es, wenn eine Netzwerkadresse eines Subnetzwerkes, auf welches das Endgerät (21) zugreift, im Konflikt mit einer Netzwerkadresse eines Subnetzwerkes steht, in dem sich die UICC (22) aktuell befindet, eine Netzwerkadress-Konfliktnachricht an die UICC (22) sendet;
das Netzwerkadress-Konfliktverwaltungsmodul (221) der UICC (22) so konfiguriert ist, dass es nach dem Empfangen der Netzwerkadress-Konfliktnachricht von dem Netzwerkadress-Konfliktverwaltungsmodul (211) des Endgerätes (21) ein IP-Adressen-Veröffentlichungs-Anforderungssignal an einen DHCP-Client (222) sendet;
der DHCP-Client (222) so konfiguriert ist, dass er die IP-Adresse in Antwort auf das IP-Adressen-Veröffentlichungs-Anforderungssignal von dem Netzwerkadress-Konfliktverwaltungsmodul (221) der UICC (22) veröffentlicht, um eine Antwort an das Netzwerkadress-Konfliktverwaltungsmodul (221) der UICC (22) zurückzugeben, und um eine DHCP-Veröffentlichungsnachricht an einen DHCP-Server (212) des Endgerätes (21) zu senden; und wobei
der DHCP-Server (212) so konfiguriert ist, dass er nach dem Empfang der DHCP-Veröffentlichungsnachricht von dem DHCP-Client (222) IP-Adressen für das Endgerät (21) und die UICC (22) neu zuteilt.

8. System nach Anspruch 7, wobei das Endgerät (21) und die UICC (22) ferner so konfiguriert sind, dass sie ihre entsprechende IP-Adresse während einem Initialisierungsprozess beziehen; und wobei
das Netzwerkadress-Konfliktverwaltungsmodul (221) der UICC (22) ferner so konfiguriert ist, dass es an einem bestimmten Port abfängt.

9. System nach Anspruch 8, wobei das Netzwerkadress-Konfliktverwaltungsmodul (221) der UICC (22) ferner so konfiguriert ist, dass es unter Verwendung von Port 67 für einen DHCP-Dienst abfängt.

10. System nach einem der Ansprüche 7 bis 9, wobei das Netzwerkadress-Konfliktverwaltungsmodul (211) des Endgerätes (21) ferner so konfiguriert ist, um die Netzwerkadress-Konfliktnachricht unter Verwendung eines User Datagramm Protocol, UDP, an Port 67 der UICC (22) zu senden.

## Revendications

1. Procédé pour une gestion d'adresse Internet basée sur un terminal, dans lequel une adresse IP se compose d'une adresse de réseau et d'une adresse d'hôte, le procédé comprenant :
lorsqu'une adresse de réseau d'un segment de sous-réseau auquel un terminal accède est en conflit avec une adresse de réseau d'un segment de sous-réseau dans lequel une Carte à circuit intégré universelle, UICC, est située actuellement, qui est l'adresse de réseau de l'adresse IP du port de connexion entre le terminal et l'UICC, l'envoi (401), par le terminal, d'un message de conflit d'adresse de réseau à l'UICC ;
après la réception du message de conflit d'adresse de réseau, la libération (402), par l'UICC, d'une adresse de Protocole Internet, IP, utilisée actuellement, et le retour, par l'UICC, d'un message de libération correspondant au terminal ;
la ré-obtention (403), par le terminal et l'UICC, d'adresses IP non conflictuelles avec une adresse de réseau du segment de sous-réseau dans lequel l'UICC est située actuellement différente de l'adresse de réseau du segment de sous-réseau auquel le terminal accède.

2. Procédé selon la revendication 1, dans lequel l'envoi, par le terminal, du message de conflit d'adresse de réseau à l'UICC comprend :
l'envoi (604), par un module de gestion de conflit d'adresse de réseau du terminal, du message de conflit d'adresse de réseau à l'UICC ;
la libération, par l'UICC, de l'adresse IP utilisée actuellement comprend :
après la réception du message de conflit d'adresse de réseau, l'envoi, par un module de gestion de conflit d'adresse de réseau de l'UICC, d'un signal de demande de libération d'adresse IP à un client de Protocole de configuration d'hôte dynamique, DHCP ;
après la libération de l'adresse IP en réponse au signal de demande de libération d'adresse IP, le retour (607), par le client DHCP, d'une réponse au module de gestion de conflit d'adresse de réseau de l'UICC, et l'envoi, par le client DHCP, d'un message de libération DHCP à un serveur DHCP du terminal.

3. Procédé selon la revendication 2, comprenant en outre : l'obtention (601), par le terminal et l'UICC, de leur adresse IP respective au cours d'un processus d'initialisation ; et l'interception (602) au niveau d'un port spécifique par le module de gestion de conflit d'adresse de réseau de l'UICC.

4. Procédé selon la revendication 3, dans lequel le module de gestion de conflit d'adresse de réseau de l'UICC intercepte en utilisant le Port 67 pour un service DHCP.

5. Procédé selon l'une quelconque des revendications 2 à 4, dans lequel l'envoi, par le module de gestion de conflit d'adresse de réseau du terminal, du message de conflit d'adresse de réseau à l'UICC comprend : l'envoi, par le module de gestion de conflit d'adresse de réseau du terminal, du message de conflit d'adresse de réseau au Port 67 de l'UICC, en utilisant un Protocole de datagramme utilisateur, UDP.

6. Système pour une gestion d'adresse Internet basée sur un terminal, dans lequel une adresse IP se compose d'une adresse de réseau et d'une adresse d'hôte, le système comprenant :
un terminal (21) et une Carte à circuit intégré universelle, UICC (22), où
le terminal (21) est configuré, lorsqu'une adresse de réseau d'un segment de sous-réseau auquel le terminal accède est en conflit avec une adresse de réseau d'un segment de sous-réseau dans lequel l'UICC est située actuellement, qui est l'adresse de réseau de l'adresse IP du port de connexion entre le terminal et l'UICC, pour envoyer un message de conflit d'adresse de réseau à l'UICC (22) ;
et lors de la réception d'un message de libération en provenance de l'UICC (22), pour ré-obtenir une adresse IP non conflictuelle avec une adresse de réseau du segment de sous-réseau dans lequel l'UICC (22) est située actuellement différente de l'adresse de réseau du segment de sous-réseau auquel le terminal accède ;
l'UICC (22) est configurée, après la réception du message de conflit d'adresse de réseau en provenance du terminal (21), pour libérer une adresse de Protocole Internet, IP, utilisée actuellement, pour retourner un message de libération correspondant au terminal, et pour ré-obtenir une adresse IP non conflictuelle avec une adresse de réseau du segment de sous-réseau dans lequel l'UICC (22) est située actuellement différente de l'adresse de réseau du segment de sous-réseau auquel le terminal accède.

7. Système selon la revendication 6, dans lequel le terminal (21) comprend un module de gestion de conflit d'adresse de réseau (211) et un serveur DHCP (212) ; et l'UICC (22) comprend un module de gestion de conflit d'adresse de réseau (221) et un client DHCP (222), dans lequel
le module de gestion de conflit d'adresse de réseau (211) du terminal (21) est configuré, lorsqu'une adresse de réseau d'un sous-réseau auquel le terminal (21) accède est en conflit avec une adresse de réseau d'un sous-réseau dans lequel l'UICC (22) est située actuellement, pour envoyer un message de conflit d'adresse de réseau à l'UICC (22) ;
le module de gestion de conflit d'adresse de réseau (221) de l'UICC (22) est configuré, après la réception du message de conflit d'adresse de réseau en provenance du module de gestion de conflit d'adresse de réseau (211) du terminal (21), pour envoyer un signal de demande de libération d'adresse IP à un client DHCP (222) ;
le client DHCP (222) est configuré pour libérer l'adresse IP en réponse au signal de demande de libération d'adresse IP en provenance du module de gestion de conflit d'adresse de réseau (221) de l'UICC (22), pour retourner une réponse au module de gestion de conflit d'adresse de réseau (221) de l'UICC (22), et pour envoyer un message de libération DHCP à un serveur DHCP (212) du terminal (21) ; et
le serveur DHCP (212) est configuré, après la réception du message de libération DHCP en provenance du client DHCP (222), pour ré-affecter des adresses IP pour le terminal (21) et l'UICC (22).

8. Système selon la revendication 7, dans lequel le terminal (21) et l'UICC (22) sont en outre configurés pour obtenir leur adresse IP respective au cours d'un processus d'initialisation ; et
le module de gestion de conflit d'adresse de réseau (221) de l'UICC (22) est en outre configuré pour intercepter au niveau d'un port spécifique.

9. Système selon la revendication 8, dans lequel le module de gestion de conflit d'adresse de réseau (221) de l'UICC (22) est en outre configuré pour intercepter en utilisant le Port 67 pour un service DHCP.

10. Système selon l'une quelconque des revendications 7 à 9, dans lequel le module de gestion de conflit d'adresse de réseau (211) du terminal (21) est en outre configuré pour envoyer le message de conflit d'adresse de réseau au Port 67 de l'UICC (22), en utilisant un Protocole de datagramme utilisateur, UDP.
